# EUROPÄISCHE PATENTANMELDUNG

(11) **EP 1 754 636 A1**
(43) Veröffentlichungstag der Anmeldung: **21.02.2007**
(21) Anmeldenummer: 06117289.6
(22) Anmeldetag: 17.07.2006
(51) Int. Cl.: B60R 21/34, B60R 21/0136

(54) **Kontaktsensorik für ein Fahrzeug**

(30) Priorität: 16.08.2005 DE 102005038593
(71) Anmelder: ROBERT BOSCH GMBH, 70442 Stuttgart (DE)
(72) Erfinder: Wellhoefer, Matthias, 70499, Stuttgart (DE); Steinkogler, Sascha, 79106, Freiburg (DE)

(57) **Zusammenfassung**

Die Erfindung betrifft eine Kontaktsensorik für ein Fahrzeug mit mindestens einem Sensor (20, 22), dessen Sensordaten für eine Erkennung einer Kollision mit einem Fußgänger ausgewertet werden. Erfindungsgemäß erzeugt der mindestens eine Sensor (20, 22) ein erstes Sensorsignal für eine erste Detektionsrichtung (D1) und ein zweites Sensorsignal für eine zweite Detektionsrichtung (D2) und gibt die Sensorsignale aus, wobei eine Auswerte- und Steuereinheit (30) die Sensorsignale zur Kollisionserkennung und zur Objektklassifizierung auswertet.

## Beschreibung

### Stand der Technik

Die Erfindung geht aus von einer Kontaktsensorik für ein Fahrzeug nach der Gattung des unabhängigen Patentanspruchs 1.

Zum Schutz von Fußgängern bei einem Aufprall mit einem Kraftfahrzeug werden konstruktive Maßnahmen an der Fahrzeugfront vorgenommen, so dass die Aufprallhärte von gefährdeten Körperpartien, wie Kopf oder Beine, gemindert wird. Eine Möglichkeit das Verletzungsrisiko zu reduzieren, besteht insbesondere in der Schaffung von Freiraum zwischen der relativ weichen Motorhaube und den relativ harten Motorbestandteilen zur Verlängerung des Deformationsweges. Dies kann durch eine Änderung des Fahrzeugdesigns oder durch ein aktives System erfolgen, welches mittels einer Sensorik den Aufprall detektiert und anschließend den nötigen Deformationsweg durch rasches Anheben der Motorhaube zur Verfügung stellt.

In der Offenlegungsschrift DE 101 45 698 A1 wird ein Sensorsystem für ein Fahrzeug beschrieben. Das beschriebene Sensorsystem umfasst eine Mehrzahl von Stoßfängersensoren, welche voneinander beabstandet in Breitenrichtung des Fahrzeugs am vorderen Stoßfänger montiert sind, und ein Steuergerät zum Steuern des Betriebs von zwei Betätigungsorganen zum Hochklappen des hinteren Endes einer Motorhaube in Abhängigkeit von Ausgangssignalen der Stoßfängersensoren. Das Steuergerät wandelt von den jeweiligen Stoßfängersensoren erfasste Beschleunigungswerte in Deformationsgeschwindigkeiten um, wobei die den einander benachbarten Sensoren zugeordneten Deformationsgeschwindigkeiten addiert werden. Übersteigt eine aufsummierte Deformationsgeschwindigkeit einen vorgegebenen Schwellenwert, dann werden die Betätigungsorgane vom Steuergerät aktiviert.

### Vorteile der Erfindung

Die erfindungsgemäße Kontaktsensorik für ein Fahrzeug mit den Merkmalen des unabhängigen Patentanspruchs hat demgegenüber den Vorteil, dass mindestens ein Sensor, dessen Sensordaten für eine Erkennung einer Kollision mit einem Fußgänger ausgewertet werden, ein erstes Sensorsignal für eine erste Detektionsrichtung und ein zweites Sensorsignal für eine zweite Detektionsrichtung erzeugt und ausgibt. Eine Auswerte- und Steuereinheit wertet die erzeugten und ausgegebenen Sensorsignale zur Kollisionserkennung und zur Objektklassifizierung aus. Dadurch wird in vorteilhafter Weise die Leistungsfähigkeit der Kontaktsensorik erhöht, ohne ein zusätzliches Sensorgehäuse in die Fahrzeugfront, beispielsweise in den Stoßfänger, integrieren zu müssen.

Zudem besteht durch die erfindungsgemäße Verwendung von Sensoren mit mehr als einer Detektionsrichtung die Möglichkeit neben einem Aufprall auch eine Verbiegung, d.h. eine Deformation, zu detektieren. Dadurch kann in der ersten Detektionsrichtung ein Aufprall mit einer geringen Deformation detektiert werden, z.B. von einem kleinen harten Gegenstand, und durch die zweite Detektionsrichtung ein Aufprall mit einer großen Deformation erkannt werden, z.B. von einem weichen schweren Gegenstand. Dies ermöglicht in vorteilhafter Weise eine verbesserte Objektklassifizierung und die Unterscheidung zwischen kleinen harter Gegenständen und weichen und schweren Gegenständen, da kleine harte Gegenstände keine ausgeprägte Deformation verursachen und somit im Gegensatz zu schweren Gegenständen kein Sensorsignal in die zweite Detektionsrichtung zu erwarten ist. Durch die erfindungsgemäße Kontaktsensorik wird insbesondere die Diskriminierung von kleinen, leichten und harten Gegenständen, wie z.B. Steine, und schweren und verhältnismäßig weichen Objekten, wie z.B. einem Lower-Leg-Impactor, verbessert.

Durch die in den abhängigen Ansprüchen aufgeführten Maßnahmen und Weiterbildungen sind vorteilhafte Verbesserungen der im unabhängigen Patentanspruch angegebenen Kontaktsensorik für ein Fahrzeug möglich.

Besonders vorteilhaft ist, dass die zweite Detektionsrichtung des mindestens einen Sensors senkrecht zur ersten Detektionsrichtung des mindestens einen Sensors angeordnet ist, wodurch die Unterscheidung zwischen den detektierten Signalen und damit die Auswertung der Signale vereinfacht wird.

In Ausgestaltung der erfindungsgemäßen Kontaktsensorik weist die erste Detektionsrichtung einen vorgebbaren Winkel zur Fahrzeuglängsrichtung auf und die zweite Detektionsrichtung weist einen vorgebbaren Winkel zur Fahrzeugquerrichtung oder zur Fahrzeughochrichtung auf.

In weiterer Ausgestaltung ist der mindestens eine Sensor beispielsweise so angeordnet, dass die erste Detektionsrichtung in Fahrzeuglängsrichtung ausgerichtet ist und die zweite Detektionsrichtung in Fahrzeugquerrichtung ausgerichtet ist. Dadurch detektiert der Sensor die durch einen Aufprall verursachten Beschleunigungen entlang der ersten Detektionsrichtung bzw. in Fahrzeuglängsrichtung und die durch Deformationen verursachte Beschleunigungen entlang der zweiten Detektionsrichtung bzw. in Fahrzeugquerrichtung.

Alternativ kann der mindestens eine Sensor so angeordnet sein, dass die erste Detektionsrichtung einen Winkel von 45° oder -45° zur Fahrzeuglängsrichtung aufweist und die zweite Detektionsrichtung einen Winkel von 45° oder -45° zur Fahrzeugquerrichtung aufweist. Dadurch detektiert der Sensor in vorteilhafter Weise bei einem Aufprall parallel zu Fahrzeuglängsachse, d.h. einem Frontalaufprall, in beide Detektionsrichtungen ungefähr gleich große Signale. Zudem kann durch Auswerten der Signalanteile der beiden Detektionsrichtungen ein Aufprallwinkel des Objekts relativ zur Fahrzeuglängsachse bestimmt werden.

In Ausgestaltung der erfindungsgemäßen Kontaktsensorik sind mindestens zwei Sensoren symmetrisch zur Fahrzeuglängsachse angeordnet. Dadurch ist es in vorteilhafter Weise möglich, den Aufprallpunkt durch Auswerten der Signale der ersten Detektionsrichtung zu bestimmen, und den bestimmten Aufprallpunkt durch Auswerten der Signale der zweiten Detektionsrichtung zu plausibilisieren oder genauer zu bestimmen, da ein Aufprall in der Nähe des Sensors eine höhere Deformation und daher ein höheres Signal in die zweite Detektionsrichtung bewirkt.

In weiterer Ausgestaltung der erfindungsgemäßen Kontaktsensorik können die Detektionsrichtungen der einzelnen Sensoren gleich und/oder verschieden ausgerichtet sein. Dies ermöglicht in vorteilhafter Weise eine beliebige Kombination der Sensoranordnungen, so dass die Kontaktsensorik nicht nur für den Fußgängerschutz, sondern auch zur Detektion eines Frontcrashs, eines Seitencrashs oder eines Crashs mit einem bestimmten Winkel relativ zur Fahrzeuglängsachse eingesetzt werden kann. Zudem können die Sensoren mit mindestens zwei Detektionsrichtungen auch in einer Up-Front-Sensorik eingesetzt werden.

Das erste Sensorsignal und/oder das zweite Sensorsignal der einzelnen Sensoren können beispielsweise zur Aufprallerkennung und/oder zur Plausibilisierung des Aufpralls und/oder zur Bestimmung des Aufprallortes und/oder zur Bestimmung des Aufprallwinkels ausgewertet werden. Dadurch ist in vorteilhafter Weise eine Offseterkennung bei einem Aufprall möglich. Zudem kann durch den Sensor mit zwei Detektionsrichtungen auch eine Drehung des Fahrzeugs erkannt werden. Aufgrund eines asymmetrischen Aufpralls, d.h. die Schwerpunkt der Stoßpartner überschneiden sich nicht, kann sich neben der Verzögerung und Rotation des Fahrzeugs aufgrund der Verformung der Fahrzeugfront eine Verdrehung des nicht überdeckten Sensors in Richtung Aufprallposition ergeben, welche durch den Sensor mit zwei Detektionsrichtungen in vorteilhafter Weise detektiert werden kann.

Bei der Auswertung die ersten und/oder zweiten Sensorsignale vergleicht die Auswerte- und Steuereinheit die Sensorsignale miteinander und/oder führt mathematische Operationen mit den ersten und/oder zweiten Sensorsignalen aus, welche eine Integration und/oder eine Betragsbildung und/oder eine Integration des Absolutbetrags und/oder eine Bestimmung von Extremwerten umfassen. So kann beispielsweise aus dem Verhältnis der beiden Sensorsignalamplituden oder der Sensorsignalintegrale bzw. der Sensorsignalabsolutwertintegrale der Aufprallwinkel bestimmt werden. Insbesondere kann ein Seitenaufprall mit einem extrem stumpfen Winkel detektiert werden, wie er beispielsweise bei einem Seitenaufprall auf einer Autobahnauffahrt vorliegt.

### Zeichnung

Ausführungsbeispiele der Erfindung sind in der Zeichnung dargestellt und werden in der nachfolgenden Beschreibung näher erläutert.

### Es zeigen:

- Figur 1: ein schematisches Blockdiagramm einer erfindungsgemäßen Kontaktsensorik,
- Figur 2: eine schematische Darstellung der Kontaktsensorik gemäß Figur 1 bei einem Frontalaufprall eines Objekts,
- Figur 3: eine schematische Darstellung der Kontaktsensorik gemäß Figur 1 bei einem Frontalaufprall eines Objekts mit einem Offset,
- Figur 4: eine schematische Darstellung der Kontaktsensorik mit einer alternativen Sensoranordnung, und
- Figur 5: schematische Darstellungen der Kontaktsensorik mit verschiedenen Sensoranordnungen.

### Beschreibung

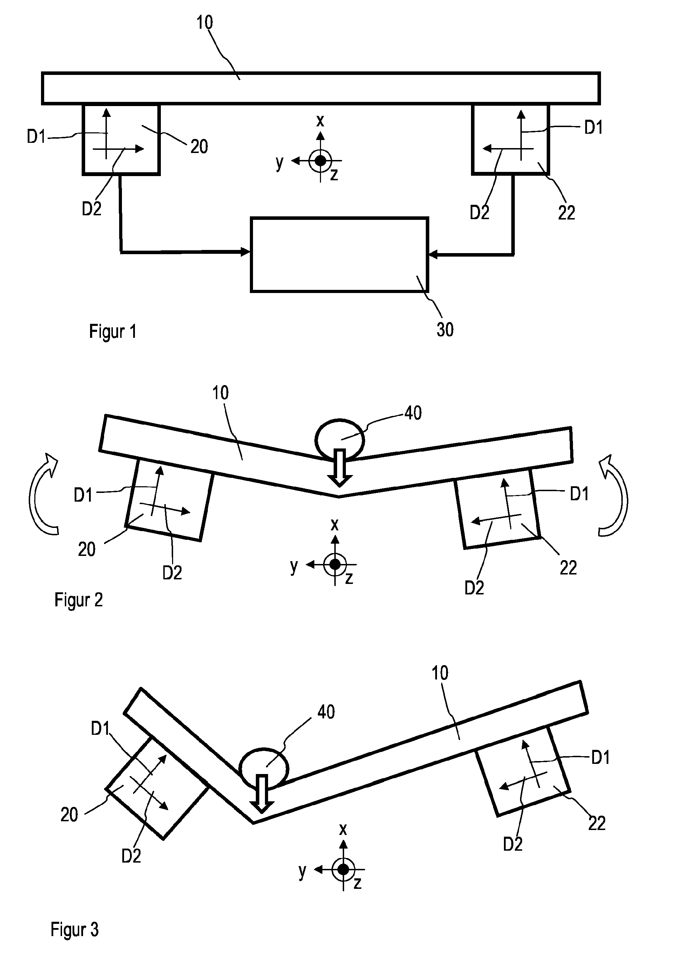

Wie aus Figur 1 ersichtlich ist umfasst ein Ausführungsbeispiel einer erfindungsgemäßen Kontaktsensorik für ein Fahrzeug 1 zwei symmetrisch zu einer Fahrzeuglängsachse x angeordnete Sensor 20, 22, deren Sensordaten für eine Erkennung einer Kollision mit einem Fußgänger von einer Auswerte- und Steuereinheit 30 ausgewertet werden. Wie weiter aus Figur 1 ersichtlich ist, sind die Sensoren an einem Stoßfänger 10 angeordnet bzw. in den Stoßfänger 10 integriert. Jeder der dargestellten Sensoren 20, 22 erzeugt ein erstes Sensorsignal für eine erste Detektionsrichtung D1 und ein zweites Sensorsignal für eine zweite Detektionsrichtung D2 und gibt die erzeugten Sensorsignale an die Auswerte- und Steuereinheit 30 aus, welche die Sensorsignale zur Kollisionserkennung und zur Objektklassifizierung auswertet. Die Sensoren 20, 22 können so am Stoßfänger 10 angeordnet werden, dass die erste Detektionsrichtung D1 einen vorgebbaren Winkel zur Fahrzeuglängsrichtung x aufweist und die zweite Detektionsrichtung D2 einen vorgebbaren Winkel zur Fahrzeugquerrichtung y aufweist.

Im Ausführungsbeispiel gemäß Figur 1 sind die Sensoren 20, 22 so angeordnet, dass die erste Detektionsrichtung D 1 der beiden Sensoren 20, 22 in Fahrzeuglängsrichtung x ausgerichtet ist und die zweite Detektionsrichtung D2 des ersten Sensors 20 in die negative Fahrzeugquerrichtung y ausgerichtet ist und die zweite Detektionsrichtung des zweiten Sensors in die positive Fahrzeugquerrichtung y ausgerichtet ist. Zudem ist die zweite Detektionsrichtung D2 senkrecht zur ersten Detektionsrichtung D1 angeordnet. Ein wesentlicher Vorteil dieser Anordnung besteht darin, dass eine Verbiegung, d.h. eine Deformation des Stoßfängers 10 detektiert werden kann. Die verhältnismäßig "weiche" Stoßfängerverkleidung wird deformiert, wenn die kinetische Energie eines Aufprallobjekts groß genug ist. Dies bedeutet, dass die Sensoren 20, 22 nur dann ein Beschleunigungssignal in ihre jeweilige zweite Detektionsrichtung D2 registrieren, wenn der Stoßfänger 10 durch einen Aufprall deformiert wird, wie aus Figur 2 ersichtlich ist. In ihre jeweilige erste Detektionsrichtung D1 registrieren die beiden Sensoren 20, 22 auch einen Aufprall mit einer geringen Deformation. Da kleine und harte Gegenstände keine ausgeprägte Deformation des Stoßfängers 10 verursachen und somit im Gegensatz zu schweren Gegenständen kein Beschleunigungssignal in die zweite Detektionsrichtung D2 verursachen, kann die Auswerte- und Steuereinheit 30 durch Auswerten der Beschleunigungssignale der beiden Detektionsrichtungen D1, D2 der Sensoren 20, 22 einen Aufprall eines kleinen und harten Objektes, beispielsweise eines Steins, von einem Aufprall eines weichen und schweren Gegenstandes, beispielsweise eines einen Fußgänger repräsentierenden Lower-Leg-Impaktors, unterscheiden. Außerdem kann die Auswerte- und Steuereinheit durch die zweite Detektionsrichtung D2 der Sensoren 20, 22 den Offset des Aufpralls bestimmen oder den Aufprall plausibilisieren, da durch die erste Detektionsrichtung D1 der Sensoren 20, 22 bereites eine grobe Offsetbestimmung möglich ist.

Figur 3 zeigt einen Frontalaufprall eines Objektes 40 mit einem Offset. Durch den versetzten Aufprall bewirkt der Aufprall in der Nähe des ersten Sensors 20 eine größere Deformation und daher eine höheres Signal in die zweite Detektionsrichtung D2 als beim zweiten Sensor 22. Der auftretende Offset und die Objektklassifikation kann beispielsweise durch einen Vergleich der Beschleunigungssignale der beiden Sensoren 20, 22 ermittelt werden. Zusätzlich können die Beschleunigungssignale vor dem Vergleich mittels mathematischer Operationen wie einer Integration, einer Integration des Absolutbetrages, einer Bestimmung von Extremwerten wie Maxima und Minima usw. aufbereitet werden. Die beschriebenen Sensoren 20, 22 mit zwei Detektionsrichtungen können ohne zusätzliches Gehäuse und ohne zusätzliche Verkabelung in bereits vorhandene Sensoranordnungen integriert werden und die Diskriminierungsfähigkeit eines aktiven Fußgängerschutzsystems wesentlich verbessern.

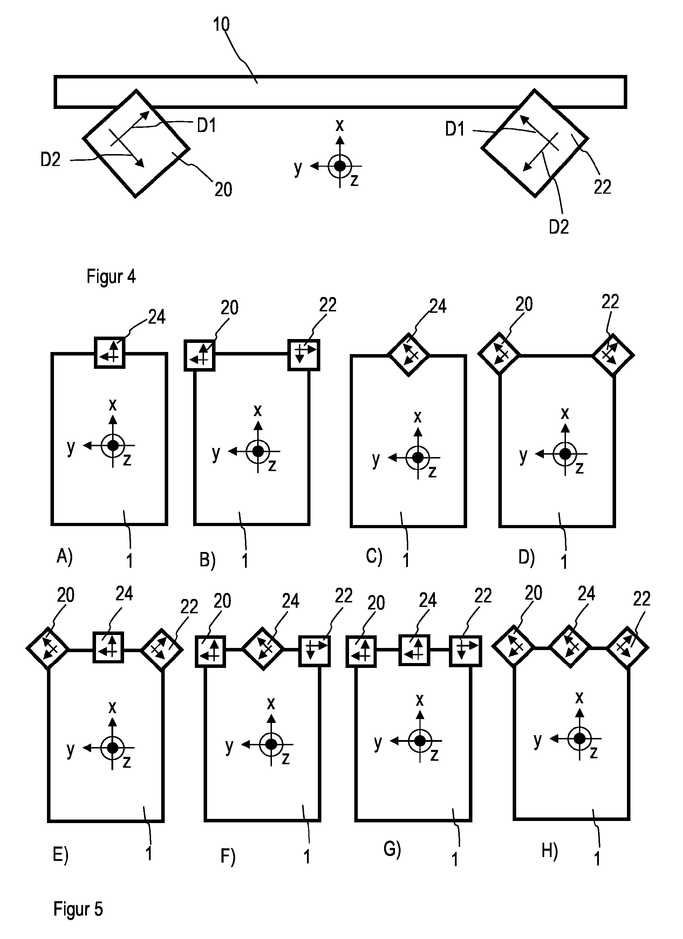

Figur 4 zeigt ein Ausführungsbeispiel der erfindungsgemäßen Kontaktsensorik für ein Fahrzeug 1 mit einer alternativen Anordnung der Sensoren 20, 22. Wie aus Figur 4 ersichtlich ist, sind die zwei symmetrisch zur Fahrzeuglängsachse x angeordneten Sensoren 20, 22 so am Stoßfänger 10 angeordnet bzw. im Stoßfänger 10 integriert, dass die erste Detektionsrichtung D1 des ersten Sensors 20 einen Winkel von -45° zur Fahrzeuglängsrichtung x aufweist und die zweite Detektionsrichtung D2 des ersten Sensors 20 einen Winkel von -45° zur Fahrzeugquerrichtung y aufweist, und die erste Detektionsrichtung D1 des zweiten Sensors 22 einen Winkel von 45° zur Fahrzeuglängsrichtung x aufweist und die zweite Detektionsrichtung D2 des zweiten Sensors 22 einen Winkel von 45° zur Fahrzeugquerrichtung y aufweist. Jeder der dargestellten Sensoren 20, 22 erzeugt ein erstes Sensorsignal für die erste Detektionsrichtung D1 und ein zweites Sensorsignal für die zweite Detektionsrichtung D2 und gibt die erzeugten Sensorsignal an die Auswerte- und Steuereinheit 30 aus, welche die Sensorsignale zur Kollisionserkennung und zur Objektklassifizierung auswertet. Der Vorteil der in Figur 4 dargestellten Sensoranordnung besteht darin, dass die beiden Sensoren 20, 22 sowohl in der ersten Detektionsrichtung D1 als auch in der zweiten Detektionsrichtung D2 ähnlich große Signale bei einer zur Fahrzeuglängsrichtung parallelen Aufprallrichtung registrieren. Zudem kann durch die Auswertung der Signalanteile der ersten und zweiten Detektionsrichtung D1, D2 ein Aufprallwinkel relativ zur Fahrzeuglängsachse x bestimmt werden.

Die Ausrichtung der Sensoren gemäße Figur 1 oder Figur 3 können beliebig kombiniert werden, so dass die Kontaktsensorik nicht nur für den Fußgängerschutz, sondern auch zur Detektion eines Frontcrashs, eines Seitencrashs oder eines Crashs mit einem bestimmten Winkel relativ zur Fahrzeuglängsachse x eingesetzt werden kann. Zusätzlich können die Sensoren mit zwei Detektionsrichtungen auch für eine Up-Front-Sensorik eingesetzt werden. Mögliche Sensoranordnungen der Kontaktsensorik für ein Fahrzeug 1 sind in Fig. 5 A) bis H) dargestellt. Die in Figur 5 dargestellten Ausführungsbeispiele für die erfindungsgemäße Kontaktsensorik für ein Fahrzeug 1 können für ein Fußgängerschutzsystem und/oder zur Crashdetektion eingesetzt werden.

Figur 5 A) zeigt ein Ausführungsbeispiel der Kontaktsensorik für ein Fahrzeug 1 mit einem mittig am Stoßfänger angeordneten Sensor 24, welcher so angeordnet ist, dass die erste Detektionsrichtung mit der Fahrzeuglängsrichtung x und die zweite Detektionsrichtung mit der Fahrzeugquerrichtung y übereinstimmt.

Figur 5 B) zeigt ein Ausführungsbeispiel der Kontaktsensorik für ein Fahrzeug 1 mit zwei symmetrisch zur Fahrzeuglängsachse x am Stoßfänger angeordneten Sensoren 20 und 22. Der erste Sensor 20 ist so im linken Bereich des Stoßfängers angeordnet, dass die erste Detektionsrichtung mit der Fahrzeuglängsrichtung x und die zweite Detektionsrichtung mit der Fahrzeugquerrichtung y übereinstimmt. Der zweite Sensor 22 ist so im rechten Bereich des Stoßfängers angeordnet, dass die erste Detektionsrichtung mit der negativen Fahrzeuglängsrichtung x und die zweite Detektionsrichtung mit der negativen Fahrzeugquerrichtung y übereinstimmt.

Figur 5 C) zeigt ein Ausführungsbeispiel der Kontaktsensorik für ein Fahrzeug mit einem mittig am Stoßfänger angeordneten Sensor 24, welcher so angeordnet ist, dass die erste Detektionsrichtung einen Winkel von 45° zur Fahrzeuglängsrichtung x und die zweite Detektionsrichtung einen Winkel von 45° zur Fahrzeugquerrichtung y aufweist.

Figur 5 D) zeigt ein Ausführungsbeispiel der Kontaktsensorik für ein Fahrzeug 1 mit zwei symmetrisch zur Fahrzeuglängsachse x am Stoßfänger angeordneten Sensoren 20 und 22. Der erste Sensor 20 ist so im linken Bereich des Stoßfängers angeordnet, dass die erste Detektionsrichtung einen Winkel von 45° zur Fahrzeuglängsrichtung x und die zweite Detektionsrichtung einen Winkel von 45° zur Fahrzeugquerrichtung y aufweist. Der zweite Sensor 22 ist so im rechten Bereich des Stoßfängers angeordnet, dass die erste Detektionsrichtung einen Winkel von -45° zur Fahrzeuglängsrichtung x und die zweite Detektionsrichtung einen Winkel von -45° zur Fahrzeugquerrichtung y aufweist.

Figur 5 E) zeigt ein Ausführungsbeispiel der Kontaktsensorik für ein Fahrzeug 1 mit drei symmetrisch zur Fahrzeuglängsachse x am Stoßfänger angeordneten Sensoren 20, 22 und 24. Ein mittig am Stoßfänger angeordneter Sensor 24 ist so angeordnet, dass die erste Detektionsrichtung mit der Fahrzeuglängsrichtung x und die zweite Detektionsrichtung mit der Fahrzeugquerrichtung y übereinstimmt. Ein Sensor 20 ist so im linken Bereich des Stoßfängers angeordnet, dass die erste Detektionsrichtung einen Winkel von 45° zur Fahrzeuglängsrichtung x und die zweite Detektionsrichtung einen Winkel von 45° zur Fahrzeugquerrichtung y aufweist. Ein Sensor 22 ist so im rechten Bereich des Stoßfängers angeordnet, dass die erste Detektionsrichtung einen Winkel von -45° zur Fahrzeuglängsrichtung x und die zweite Detektionsrichtung einen Winkel von -45° zur Fahrzeugquerrichtung y aufweist.

Figur 5 F) zeigt ein Ausführungsbeispiel der Kontaktsensorik für ein Fahrzeug 1 mit drei symmetrisch zur Fahrzeuglängsachse x am Stoßfänger angeordneten Sensoren 20, 22 und 24. Ein mittig am Stoßfänger angeordneter Sensor 24 ist so angeordnet, dass die erste Detektionsrichtung einen Winkel von 45° zur Fahrzeuglängsrichtung x und die zweite Detektionsrichtung einen Winkel von 45° zur Fahrzeugquerrichtung y aufweist. Ein Sensor 20 ist so im linken Bereich des Stoßfängers angeordnet, dass die erste Detektionsrichtung mit der Fahrzeuglängsrichtung x und die zweite Detektionsrichtung mit der Fahrzeugquerrichtung y übereinstimmt. Ein Sensor 22 ist so im rechten Bereich des Stoßfängers angeordnet, dass die erste Detektionsrichtung mit der negativen Fahrzeuglängsrichtung x und die zweite Detektionsrichtung mit der negativen Fahrzeugquerrichtung y übereinstimmt.

Figur 5 G) zeigt ein Ausführungsbeispiel der Kontaktsensorik für ein Fahrzeug 1 mit drei symmetrisch zur Fahrzeuglängsachse x am Stoßfänger angeordneten Sensoren 20, 22 und 24. Ein mittig am Stoßfänger angeordneter Sensor 24 ist so angeordnet, dass die erste Detektionsrichtung mit der Fahrzeuglängsrichtung x und die zweite Detektionsrichtung mit der Fahrzeugquerrichtung y übereinstimmt. Ein Sensor 20 ist so im linken Bereich des Stoßfängers angeordnet, dass die erste Detektionsrichtung mit der Fahrzeuglängsrichtung x und die zweite Detektionsrichtung mit der Fahrzeugquerrichtung y übereinstimmt. Ein Sensor 22 ist so im rechten Bereich des Stoßfängers angeordnet, dass die erste Detektionsrichtung mit der negativen Fahrzeuglängsrichtung x und die zweite Detektionsrichtung mit der negativen Fahrzeugquerrichtung y übereinstimmt.

Figur 5 H) zeigt ein Ausführungsbeispiel der Kontaktsensorik für ein Fahrzeug 1 mit drei symmetrisch zur Fahrzeuglängsachse x am Stoßfänger angeordneten Sensoren 20, 22 und 24. Ein mittig am Stoßfänger angeordneter Sensor 24 ist so angeordnet, dass die erste Detektionsrichtung einen Winkel von 45° zur Fahrzeuglängsrichtung x und die zweite Detektionsrichtung einen Winkel von 45° zur Fahrzeugquerrichtung y aufweist. Ein Sensor 20 ist so im linken Bereich des Stoßfängers angeordnet, dass die erste Detektionsrichtung einen Winkel von 45° zur Fahrzeuglängsrichtung x und die zweite Detektionsrichtung einen Winkel von 45° zur Fahrzeugquerrichtung y aufweist. Ein Sensor 22 ist so im rechten Bereich des Stoßfängers angeordnet, dass die erste Detektionsrichtung einen Winkel von -45° zur Fahrzeuglängsrichtung x und die zweite Detektionsrichtung einen Winkel von -45° zur Fahrzeugquerrichtung y aufweist.

Die Auswerte- und Steuereinheit 30 kann das erste Sensorsignal und/oder das zweite Sensorsignal der einzelnen Sensoren 20, 22, 24 zur Aufprallerkennung und/oder zur Plausibilisierung des Aufpralls und/oder zur Bestimmung des Aufprallortes und/oder zur Bestimmung des Aufprallwinkels auswerten. Bei der Auswertung können die ersten und/oder zweiten Sensorsignale direkt miteinander verglichen werden. Zusätzlich oder alternativ können vor dem Vergleich mathematische Operationen mit den ersten und/oder zweiten Sensorsignalen ausgeführt werden, welche beispielsweise eine Integration und/oder eine Betragsbildung und/oder eine Integration des Absolutbetrags und/oder eine Bestimmung von Extremwerten usw. umfassen.

Durch die Verwendung von Sensoren mit zwei Detektionsrichtungen können zudem Drehungen detektiert werden. Durch das Auswerten des Verhältnisses der Sensorsignalamplituden oder der Sensorsignalintegrale oder der Sensorsignalabsolutintegrale der Sensoren 20, 22 und 24 ist es möglicht den Aufprallwinkel zu bestimmen. Insbesondere kann ein Seitenaufprall mit einem sehr stumpfen Winkel detektiert werden, wie er beispielsweise bei einem Seitenaufprall auf einer Autobahnauffahrt auftritt, welcher eine Zündung der Seitenairbags erfordert. Zudem ermöglichen Sensoren mit um einen Winkel von 45° bzw. -45° gedrehten Detektionsrichtungen eine Plausibilisierung eines Frontalaufpralls. Dabei werden die beiden unabhängigen Sensorsignale des zugehörigen Sensors aufmtegriert und miteinander verglichen. Sofern sich die beiden Signale innerhalb eines definierten Toleranzbereiches befinden, kann beispielsweise ein entsprechendes Schutzsystem aktiviert werden.

## Patentansprüche

1. Kontaktsensorik für ein Fahrzeug mit mindestens einem Sensor (20, 22, 24), dessen Sensordaten für eine Erkennung einer Kollision mit einem Fußgänger ausgewertet werden, **dadurch gekennzeichnet, dass** der mindestens eine Sensor (20, 22, 24) ein erstes Sensorsignal für eine erste Detektionsrichtung (D1) und ein zweites Sensorsignal für eine zweite Detektionsrichtung (D2) erzeugt und ausgibt, wobei eine Auswerte- und Steuereinheit (30) die Sensorsignale zur Kollisionserkennung und zur Objektklassifizierung auswertet.

2. Kontaktsensorik nach Anspruch 1, **dadurch gekennzeichnet, dass** die zweite Detektionsrichtung (D2) senkrecht zur ersten Detektionsrichtung (D1) ausgerichtet ist.

3. Kontaktsensorik nach Anspruch 1 oder 2, **dadurch gekennzeichnet, dass** die erste Detektionsrichtung (D1) einen vorgebbaren Winkel zur Fahrzeuglängsrichtung (x) aufweist und die zweite Detektionsrichtung (D2) einen vorgebbaren Winkel zur Fahrzeugquerrichtung (y) oder zur Fahrzeughochrichtung (z) aufweist.

4. Kontaktsensorik nach einem der Ansprüche 3, **dadurch gekennzeichnet, dass** die erste Detektionsrichtung (D1) in Fahrzeuglängsrichtung (x) ausgerichtet ist und die zweite Detektionsrichtung (D2) in Fahrzeugquerrichtung (y) oder in Fahrzeughochrichtung (z) ausgerichtet ist.

5. Kontaktsensorik nach Anspruch 3, **dadurch gekennzeichnet, dass** die erste Detektionsrichtung (D1) einen Winkel von 45° oder -45° zur Fahrzeuglängsrichtung (x) aufweist und die zweite Detektionsrichtung (D2) einen Winkel von 45° oder -45° zur Fahrzeugquerrichtung (y) oder zur Fahrzeughochrichtung (z) aufweist.

6. Kontaktsensorik nach einem der Ansprüche 1 bis 5, **dadurch gekennzeichnet, dass** mindestens zwei Sensoren (20, 22, 24) symmetrisch zur Fahrzeuglängsachse angeordnet sind.

7. Kontaktsensorik nach Anspruch 6, **dadurch gekennzeichnet, dass** die Detektionsrichtungen (D1, D2) der einzelnen Sensoren (20, 22, 24) gleich und/oder verschieden ausgerichtet sind.

8. Kontaktsensorik nach einem der Ansprüche 1 bis 7, **dadurch gekennzeichnet, dass** das erste Sensorsignal und/oder das zweite Sensorsignal der einzelnen Sensoren (20, 22, 24) zur Aufprallerkennung und/oder zur Plausibilisierung des Aufpralls und/oder zur Bestimmung des Aufprallortes und/oder zur Bestimmung des Aufprallwinkels auswertbar sind.

9. Kontaktsensorik nach einem der Ansprüche 1 bis 8, **dadurch gekennzeichnet, dass** die Auswerte- und Steuereinheit (30) bei der Auswertung die ersten und/oder zweiten Sensorsignale miteinander vergleicht und/oder mathematische Operationen mit den ersten und/oder zweiten Sensorsignalen ausführt, welche eine Integration und/oder eine Betragsbildung und/oder eine Integration des Absolutbetrags und/oder eine Bestimmung von Extremwerten umfassen.

10. Kontaktsensorik nach einem der Ansprüche 1 bis 9, **dadurch gekennzeichnet, dass** die Auswerte- und Steuereinheit (30) die ersten und/oder zweiten Sensorsignale zur Detektion eines Frontcrashs und/oder eines Seitencrashs auswertet.
